# EUROPÄISCHE PATENTSCHRIFT

(11) **EP 1 933 630 B1**
(45) Veröffentlichungstag und Bekanntmachung des Hinweises auf die Patenterteilung: **02.06.2010**
(21) Anmeldenummer: 06805694.4
(22) Anmeldetag: 12.09.2006
(51) Int. Cl.: A22C 13/00

(54) **PIGMENTIERTER UND INNENIMPRÄGNIERTER CELLULOSE-FASERDARM**
PIGMENTED AND INTERNALLY IMPREGNATED CELLULOSE FIBRE SAUSAGE SKIN
BOYAU DE FIBRES CELLULOSIQUES PIGMENTE ET A IMPREGNATION INTERNE

(30) Priorität: 16.09.2005 DE 102005044321
(43) Veröffentlichungstag der Anmeldung: 25.06.2008
(73) Patentinhaber: Kalle GmbH, 65203 Wiesbaden (DE)
(72) Erfinder: HAMMER, Klaus-Dieter, 65120 Mainz (DE); GORD, Herbert, 55218 Ingelheim (DE); FÖGLER, Jens, 65232 Taunusstein (DE); SEELGEN, Michael, 65510 Idstein (DE)
(74) Vertreter: Plate, Jürgen
(86) Internationale Anmeldenummer: PCT/EP2006/008863
(87) Internationale Veröffentlichungsnummer: WO 2007/031269

(56) Entgegenhaltungen:
- EP-A1- 0 087 241
- EP-A1- 0 286 026
- DE-A1- 4 002 083
- DE-A1- 10 360 610
- US-A- 4 142 013

## Beschreibung

Die Erfindung betrifft einen doppelviskosierten Cellulose-Faserdarm mit einer pigmentierten äußeren und einer imprägnierten inneren Cellulosehydratschicht. Sie betrifft ferner ein Verfahren zu dessen Herstellung sowie die Verwendung des Faserdarms als künstliche Wursthülle.

Doppelviskosierte Cellulosefaserdärme sind seit langem bekannt. Bei ihrer Herstellung wird ein naßfestes Faserpapier zu einem Schlauch geformt, der dann von innen und außen mit Viskose beschichtet wird. Der mit Viskose beschichtete Schlauch durchläuft dann mehrere Fäll- und Waschbäder, in denen die Cellulose aus der Viskose regeneriert wird. Es ist ferner bekannt, die auf der Außenseite aufgetragene Viskose mit weißen Pigmenten, speziell mit Titandioxid-Pigmenten, abzumischen. Auf diese Weise wird eine weiße Hülle erhalten. Bis zum Abbinden einer in die Hülle eingefüllten Fleischmasse (Würstbrät) gibt dieses gefärbten Fleischsaft ab, der in die Hülle eindiffundiert und unansehnliche Flecken in der außen befindlichen, pigmentierten Cellulosehydratschicht verursacht. Um diesem Effekt entgegenzuwirken, wurde die innere, nicht pigmentierte Cellulosehydratschicht mit Gluconsäure-δ-lacton imprägniert. Das Gluconsäure-δ-lacton läßt den Fleischsaft koagulieren, so daß er nicht mehr in die äußere, weiß pigmentierte Cellulosehydratschicht gelangen kann (DE-A 35 43 633). Um den gewünschten Effekt zu erreichen, muß die Cellulosehydratschicht auf der Innenseite jedoch mit relativ viel Gluconsäure-δ-lacton imprägniert werden. Ein anderer Ansatz zur Lösung dieses Problems bestand darin, den Fleischsaft mit organischen Säuren auszufällen (DE-A 36 20 165).

Die bisher bekannten Mittel zum Koagulieren des farbigen Fleischsaftes sind alle mehr oder weniger wasserlöslich und werden daher beim Wässern der Hüllen herausgelöst. Darüber hinaus ist die Struktur der Cellulosehydratschicht abhängig von den Fällbedingungen, so daß die Menge der koagulierend wirkenden Mittel nicht immer ausreicht, um den Fleischsaft quantitativ auszufällen. Die bisher bekannten weißen Cellulose-Faserdärme zeigten nach dem Füllen immer wieder unerwünschte Flecken.

Es bestand daher die Aufgabe, die innere Cellulosehydratschicht so zu modifizieren, daß die Fleckenbildung zuverlässig verhindert wird und zwar unabhängig davon, wie die Struktur des Cellulosehydrats ist und wie lange der Darm vor dem Füllen gewässert wurde.

Gefunden wurde, daß relativ niedermolekulare Kollagen-Hydrolysate von der inneren Cellulosehydratschicht gut aufgenommen und dort auch verankert werden können, so daß sie nicht mehr auswaschbar sind.

Gegenstand der Erfindung ist daher ein doppelviskosierter Cellulose-Faserdarm mit einer pigmentierten äußeren und einer imprägnierten inneren Cellulosehydratschicht, der dadurch gekennzeichnet ist, daß die Imprägnierung der inneren Cellulosehydratschicht ein Kollagen-Hydrolysat umfaßt.

Das Kollagen-Hydrolysat läßt sich insbesondere durch enzymatische, saure oder alkalische Hydrolyse von Kollagen herstellen. Unter dem Begriff "Hydrolysat" soll im Zusammenhang mit der vorliegenden Erfindung ein abgebautes Kollagen verstanden werden, das bei 20 bis 30 °C vorzugsweise kein festes Gel mehr bildet. Es hat allgemein ein Molekulargewicht von etwa 3.000 bis 30.000 Dalton, bevorzugt 3.500 bis 25.000 Dalton, besonders bevorzugt 4.000 bis 12.000 Dalton, bestimmt durch Gelpermeations-Chromatographie. Es hat dabei eine relativ breite Molekulargewichtsverteilung in diesem Bereich. In warmem Wasser (60 °C) ist es vollständig löslich, zumindest lassen sich kolloidale Lösungen erhalten. In einer bevorzugten Ausführungsform ist das Kollagen-Hydrolysat eine Gelatine mit einer Bloomzahl von 0 bis 100, bevorzugt von 0 bis 50. Eine Gelatine mit einer Bloomzahl von 0 geliert nicht mehr. Aufgrund seines relativ geringen Molekulargewichts kann das Kollagen-Hydrolysat tief in die Cellulosehülle einziehen und dabei Poren des Cellulose-Geldarms bzw. der vorgetrockneten Cellulosehülle füllen. Das wird besonders deutlich, wenn die Hülle wie folgt untersucht wird: 250 mg Material werden gleichmäßig von einer 500 cm² großen Fläche der Innenseite der Hülle abgeschabt. Der Anteil an Kollagen-Hydrolysat in diesen 250 mg wird dann bestimmt und auf eine Fläche von 1 m² umgerechnet. Die erfindungsgemäße Hülle enthält danach auf der inneren Oberfläche pro Quadratmeter etwa 60 bis 400 mg, besonders bevorzugt mit etwa 80 bis 150 mg, Kollagen-Hydrolysat. Von der gleichen Probenoberfläche werden dann gleichmäßig weitere 250 mg Material abgeschabt. Der Anteil an Kollagen-Hydrolysat beträgt darin immer noch 50 bis 90 % des Anteils in dem zuerst abgeschabten Material. Auch in einem dritten Durchgang von der gleichen Fläche abgeschabten 250 mg ist noch Kollagen-Hydrolysat enthalten. Der Anteil beträgt dann noch 40 bis 80 % des Anteils in den zuerst gewonnenen 250 mg an Material. Durch die Behandlung mit dem Kollagen-Hydrolysat wird die Hülle zudem dauerhaft weichgemacht. Durch das Füllen der Poren in der regenerierten Cellulose nimmt auch die Permeation ab. Dieser Effekt tritt besonders deutlich bei glycerinfreien Faserdärmen für Dauerwurst hervor. Hier kann die Permeation durch die Behandlung bis auf Werte von weniger als 50 l/m² d bei 40 bar abnehmen.

Damit das Kollagen-Hydrolysat auch nach längerem Wässern der Nahrungsmittelhülle nicht wieder herausgewaschen wird, kann es zusätzlich mit der Cellulose verbunden werden. Dafür eignen sich besonders niedermolekulare Vernetzer mit 2 oder mehr reaktiven Gruppen, die kovalente Bindungen zwischen dem Kollagen-Hydrolysat und der Cellulose herstellen. Das sind beispielsweise Verbindungen mit 2 oder mehr Carbaldehyd-Gruppen, wie Glyoxal, Glutardialdehyd, Bernsteinsäuredialdehyd oder Zuckerdialdehyde; daneben auch epoxidierte Leinöle, Dialkylketene oder Tannin. Es können auch mehrere Vernetzer gleichzeitig verwendet werden. Die Vernetzer werden allgemein mit der Imprägnierungslösung vermischt. Die beim nachfolgenden Trocknen der Hülle zugeführte Wärme reicht allgemein aus, um eine vollständige Vernetzung zu erreichen. Die Verbindung zwischen dem Kollagen-Hydrolysat und der Cellulose kann prinzipiell auch auf andere Weise hergestellt werden, beispielsweise durch Bestrahlen mit energiereicher Strahlung, wie UV-Strahlen oder γ-Strahlen.

Die auf der Innenseite der Hülle befindliche Cellulosehydratschicht kann zusätzlich mit Gluconsäure-δ-lacton imprägniert sein. Im Vergleich zu der aus der DE-A 35 43 633 bekannten Hülle kann der Anteil an Gluconsäure-δ-lacton aufgrund der Wirkung des Kollagen-Hydrolysats geringer sein. Allgemein hat sich ein Anteil von 1,0 bis 6,0 Gew.-%, bevorzugt von 2,0 bis 5,0 %. Gluconsäure-ö-lacton, jeweils bezogen auf das Trockengewicht der inneren Cellulosehydratschicht, als zweckmäßig erwiesen.

Die zum Imprägnieren eingesetzte Zusammensetzung hat allgemein einen pH-Wert im Bereich von 1 bis 5. Bevorzugt wird das Kollagenhydrolysat, gegebenenfalls kombiniert mit mindestens einem Vernetzer, in verdünnter wäßriger Essigsäure gelöst. Gut geeignet ist beispielsweise eine 3 %ige Essigsäurelösung. Der Anteil an Kollagen-Hydrolysat in der wäßrigen Zusammensetzung beträgt zweckmäßig etwa 2 bis 30 Gew.-%, bevorzugt etwa 2,5 bis 20 Gew.-%, jeweils bezogen auf das Gesamtgewicht der Imprägnierzusammensetzung. Zur Verknüpfung mit der Cellulose enthält die Lösung allgemein noch mindestens einen Vernetzer in einem Anteil von etwa 2 bis 10 Gew.-%, bevorzugt etwa 3 bis 5 Gew.-%, jeweils bezogen auf das Gewicht des Kollagenhydrolysats.

Die Kollagen-Hydrolysat enthaltende wäßrige Zusammensetzung kann zusätzlich auch auf der Außenseite der Hülle aufgebracht werden. Eine solche Außenpräparation erhöht insbesondere die Resistenz gegen cellulytisch wirkende Enzyme (Cellulasen), wie sie von Schimmelpilzen bei der Herstellung von schimmelgereiften Dauerwürsten gebildet werden. Darüber hinaus bewirkt sie eine feste Haftung des Schimmelbewuchses.

Zusätzlich kann die zum Imprägnieren eingesetzte wäßrige Zusammensetzung auch noch Kollagenfasern enthalten. Diese haben mit 250.000 Dalton und mehr ein im Vergleich zu den Kollagen-Hydrolysaten ein wesentlich höheres Molekulargewicht und können daher praktisch nicht mehr in die Cellulosehydratschicht einziehen. Befinden sich die Kollagenfasern auf der Innenseite, dann haftet die Hülle wesentlich stärker am Wurstbrät.

Die erfindungsgemäße Nahrungsmittelhülle kann mit den üblichen Verfahren und bekannten Vorrichtungen hergestellt werden. Um die innere Oberfläche zu imprägnieren, kann beispielsweise eine vorbestimmte Menge an Imprägnierlösung in das Innere des Schlauches eingefüllt werden. Die Lösung wird dann in einer sich permanent neu bildenden Schlaufe des durch die Vorrichtung geführten Schlauches stationär gehalten ("Slug coating"). Imprägniert wird der Schlauch vorzugsweise während sich die regenerierte Cellulose noch im GelZustand befindet, d.h. bevor der Schlauch das erste Mal getrocknet wird.

Verwendet wird die erfindungsgemäße Nahrungsmittelhülle vor allem als künstliche Wursthülle, speziell für Dauerwurst, wie Salami.

Die nachfolgenden Beispiele dienen zur Illustration der Erfindung. Prozente sind darin Gewichtsprozente, soweit nicht anders angegeben oder aus dem Zusammenhang unmittelbar ersichtlich.

### Beispiel 1

In einen faserverstärkten Cellulose-Geldarm vom Kaliber 60, der doppelviskosiert war (60 % Viskose außen, 40 % Viskose innen auf der Faserverstärkung) und dessen äußere Cellulosehydrat-Schicht 9 % TiO₂-Weißpigment enthielt, bezogen auf das Trockengewicht der gesamten (innen und außen befindlichen) regenerierten Cellulose, wurden vor dem Einlauf in den Trockner 8 Liter einer wäßrigen Imprägnierlösung eingefüllt, die

| | |
|---|---|
| 6 % | Kollagen-Hydrolysat (mittleres Molekulargewicht etwa 8.000 bis 10.000 Dalton) |
| 0,36 | Glyoxal (3 %, bezogen auf das Gewicht des Kollagen-Hydrolysats) |
| 3 % | Glycerin und |
| 6 % | Gluconsäure-δ-lacton |

enthielt. Der imprägnierte Schlauch wurde dann in aufgeblasenem Zustand durch den Trockner geführt, wo er auf 8 bis 12 % Restfeuchte getrocknet wurde. Anschließend wurde er auf 16 bis 18 % befeuchtet und zu Raupen gerafft.

Das Molekulargewicht des Kollagen-Hydrolysats wurde bestimmt durch Gelpermeations-Chromatographie mit einer ®Superdex Peptide 10/300 GL Säule von Amersham Bioscience. Als Eichsubstanzen wurden dabei eingesetzt:

| | | |
|---|---|---|
| B-Lactoglobin | MG 35.000 Dalton | 5 mg/ml |
| Ribonuclease A | MG 13.700 Dalton | 5 mg/ml |
| Cytochrom C | MG 12.500 Dalton | 1 mg/ml |
| Apratinin | MG 6.512 Dalton | 2 mg/ml |
| Vitamin B12 | MG 1.355 Dalton | 0,2 mg/ml |
| Puffer: | 0,02 M Phosphat-Puffer und 0,25 M NaCl, pH 7,2 | |
| Fließrate: | 0,4 ml/min | |
| Temperatur: | 20 °C | |
| Detection: | 0,02 AUFS, 280 nm | |
| Probemenge: | 250 µl | |

Der Hauptpeak des Kollagen-Hydrolysats lag zu 80 % im Bereich von 8.000 bis 10.000 Dalton.

Die Auftragsmenge an Kollagen-Hydrolysat auf der Innenseite des Schlauches wurde auf die oben beschriebene Weise durch Abschaben ermittelt. Auf diese Weise wurde festgestellt, daß die obersten Bereiche der Innenseite 120 bis 180 mg Kollagen-Hydrolysat pro Quadratmeter enthalten.

Die Raupen wurde dann mit Salami-Brät gefüllt und unter den üblichen Bedingungen mehrere Wochen lang gereift. Nach Ablauf der Reifedauer wurde das Aussehen der Oberfläche der Würste geprüft. Es fanden sich keine braunen Flecken oder sonstigen Verfärbungen auf der weißen Hülle.

### Beispiel 2

In einen faserverstärkten Cellulose-Geldarm vom Kaliber 45, der doppelviskosiert war (60 % Viskose außen, 40 % Viskose innen auf der Faserverstärkung) und dessen äußere Cellulosehydrat-Schicht 9 % TiO₂-Weißpigment enthielt, bezogen auf das Gesamtgewicht der regenerierten Cellulose, wurden vor dem Einlauf in den Trockner 6 Liter einer wäßrigen Zusammensetzung mit 4 % Feststoffanteil eingefüllt. Der Feststoff bestand aus 50 % Kollagen-Hydrolysat und 50 % Kollagen-Fasern. Die Zusammensetzung enthielt daneben 3 % an Glyoxal, bezogen auf das Feststoffgewicht. Insgesamt enthielt die Zusammensetzung:

| | |
|---|---|
| 4 % | Kollagen-Hydrolysat (mittleres Molekulargewicht etwa 12.000 Dalton) |
| 2 % | Kollagen-Fasern |
| 0,15 % | Glyoxal (3 %, bezogen auf das Feststoffgewicht) |
| 3 % | Glycerin und |
| 6 % | Gluconsäure-δ-lacton. |

Auf die äußere Oberfläche wurde mit einem Walzenantragswerk eine wäßrige Zusammensetzung mit ebenfalls 4 % Feststoffanteil (80 % Kollagen-Hydrolysat und 20 % Kollagen-Fasern) und 3 %, bezogen auf das Feststoffgewicht, an Glyoxal als Vernetzer. Insgesamt enthielt die Zusammensetzung

| | |
|---|---|
| 3,2 % | Kollagen-Hydrolysat (mittleres Molekulargewicht etwa 6.000 Dalton) |
| 0,8 % | Kollagen-Fasern |
| 0,24 % | Glyoxal (3 %, bezogen auf das Feststoffgewicht) und |
| 3,0 % | Glycerin. |

Der imprägnierte Schlauch wurde dann in aufgeblasenem Zustand durch den Trockner geführt, wo er auf 8 bis 12 % Restfeuchte getrocknet wurde. Anschließend wurde er auf 16 bis 18 % befeuchtet und zu Raupen gerafft. Die Auftragsmenge an Kollagen betrug auf der Innenseite in der obersten Schicht 45 mg/m², in der 2. Schicht 35 mg/m² und in der 3. Schicht 25 mg/m². Auf der Außenseite betrug die Auftragsmenge 80 mg/m² in der obersten Schicht und 60 mg/m² in der darunter liegenden 2. Schicht. Die Auftragsmenge wurde, wie oben beschrieben, anhand von Proben bestimmt, die durch gleichmäßiges Abschaben von jeweils 250 mg Feststoff von einer 5 dm² großen Fläche erhalten wurden. Die so imprägnierten Hüllen waren wesentlich weicher als nicht imprägnierte Hüllen. Der durch Cellulase bewirkte Abbau der Cellulose betrug nur noch 4 %, während eine nicht imprägnierte Hülle einen Abbau von 14 % zeigte. Die Bestimmung der Cellulase-Resistenz erfolgte nach einer standardisierten Methode, bei der cellulytische Enzyme auf den Darm einwirken und der dadurch bewirkte Gewichtsverlust festgestellt wird. Die Bestimmung erfolgte gravimetrisch. Dazu wurden eine Probe der Hülle mit einer Größe von etwa 100 cm² gewaschen bis sie frei von Glycerin war, getrocknet und zerkleinert. Die Stücke wurde dann mit einer wäßrigen Lösung bedeckt, die aus 5 Gt einer 0,1 %igen wäßrigen Cellulase-Lösung und 95 ml wäßrigem Acetatpuffer (zur Einstellung des pH-Werts auf etwa 5), geschüttelt und anschließend 24 Stunden lang bei 39 °C gelagert. Die Proben wurden danach mit Wasser ausgewaschen, getrocknet (3 Stunden bei 110 °C) und erneut gewogen. Der prozentuale Gewichtsverlust war dann das Maß für den Cellulaseabbau.

Die Raffraupen wurden dann mit Salamibrät gefüllt. Die Reifung der Würste erfolgte unter üblichen Bedingungen. Die Hülle zeigte im Vergleich zu einer Hülle ohne Imprägnierung eine verbesserte Haftung. Sie ließ sich dennoch problemlos vom Brät abziehen. Auch nach der Reifedauer waren keine Flecken oder Verfärbungen auf der weißen Außenseite erkennbar.

### Beispiel 3

Verwendet wurde eine mit einer Faserpapiereinlage verstärkte, doppelviskosierte Cellulosehülle vom Kaliber 39, die in der äußeren Cellulosehydratschicht 9 % Titandioxid-Weißpigment enthielt, bezogen auf das Trockengewicht der gesamten regenerierten Cellulose (innen und außen) und bei deren Herstellung die Viskose mit 5 % Alginat, 1,5 % eines Copolymers aus Einheiten von N-Vinylpyrrolidon und Ethyl-(2-methacryloyloxy-ethyl)-dimethyl-ammonium-sulfat (das Copolymer ist unter der Bezeichnung ®Gafquat 755N von GAF Chem. Corp. erhältlich) und Calciumstearat vermischt worden war. Alginat und Gafquat wirkten als primäre (nicht auswaschbare) Weichmacher, so daß die Hülle anstelle der sonst üblichen 22 % nur 10 % Glycerin ausreichten. Die Hülle wurde im flachgelegten Zustand auf der Außenseite imprägniert mit einer wäßrigen Zusammensetzung, die einen Feststoffanteil von 4 % aufwies. Der Feststoffanteil setzte sich zusammen aus 80 % Kollagen-Hydrolysat und 20 % Kollagen-Fasern. Die Zusammensetzung enthielt daneben 3 % Glyoxal als Vernetzer, bezogen auf das Feststoffgewicht, sowie 4% Gluconsäure-δ-lacton und 3 % Glycerin, jeweils bezogen auf das Gewicht der Zusammensetzung.

Die Innenimprägnierung erfolgte kurz vor dem Eintritt der Hülle in den Trockner. Dafür wurde eine Zusammensetzung mit ebenfalls 4 % Feststoffanteil verwendet, wobei der Feststoff jeweils zu 50 % aus Kollagen-Hydrolysat und Kollagen-Fasern bestand. Im übrigen enthielt die Zusammensetzung 3 % Glyoxal, bezogen auf das Feststoffgewicht, 5 % Gluconsäure-δ-lacton und 3 % Glycerin, jeweils bezogen auf das Gewicht der Zusammensetzung.

Der Schlauch wurde, wie üblich, in aufgeblasenem Zustand mit Heißluft bis auf einen Feuchtegehalt von 8 bis 12 % getrocknet, sodann auf 16 bis 18 % angefeuchtet und zu Raupen gerafft. Aus der Untersuchung von jeweils 250 mg schweren Proben, die von 5 dm² großen Flächen der Innen- bzw. der Außenseite abgeschabt worden waren, ergab sich eine Auftragsmenge von 188 mg Kollagen-Hydrolysat bzw. Hydrolysat plus Fasern pro Quadratmeter außen und 86 mg pro Quadratmeter innen. Die so hergestellte Hülle zeigte eine Permeation von 38 l/m² d. Sie war sehr weich und geschmeidig, so daß sie gut verarbeitet werden konnte.

Gefüllt wurde die Hülle mit Salami-Brät. Die Würste wurden mehrere Wochen lang schimmelgereift. Der Schimmel wuchs langsam, gleichmäßig verteilt und dicht als kurzer "Rasen". Er haftete dabei fest an der Hülle. Die Hülle zeigte nach der Reifedauer praktisch keine Beschädigungen durch cellulytisch wirkende Enzyme, die von dem Schimmel gebildet wurden. Die Hülle zeigte aufgrund der Innenimprägnierung einen festen Halt, ließ sich aber dennoch gut abschälen.

### Beispiel 4

Ein mit einer Faserpapier-Einlage verstärkter, doppelviskosierter (40 % Viskose außen, 60 % innen) Cellulosehydrat-Gelschlauch vom Kaliber 45 wurde im flachgelegten Zustand über ein Walzenantragswerk gefahren, wo er mit einer wäßrigen Zusammensetzung beaufschlagt wurde, die 4 % Feststoffanteil aufwies. Der Feststoffanteil setzte sich zusammen aus 80 % Kollagen-Hydrolysat und 20 % Kollagen-Fasern. Des weiteren enthielt die Zusammensetzung 3 % Glyoxal, bezogen auf das Feststoffgewicht, und 3 % Glycerin, bezogen auf das Gewicht der Zusammensetzung.

Innen wurde der Schlauch in einem ersten Schritt mit Polyamin-Polyamid-Epichlorhydrin-Harz imprägniert, das als Verankerungsmittel wirkte. Anschließend wurde auf der Innenseite eine PVDC-Dispersion aufgetragen. Die imprägnierte und beschichtete Hülle wurde dann im aufgeblasenen Zustand in einem Heißlufttrockner bis auf eine Feuchte von 8 bis 12 % getrocknet. Sie wurde sodann bis auf 16 bis 18 % befeuchtet und gerafft. Die Auftragsmenge an Kollagen, bestimmt nach dem bereits beschriebenen Verfahren; betrug 56 mg/m². In der darunter liegenden Schicht waren davon noch 78 % des Wertes in der obersten Schicht, in der 3. Schicht noch 77 %. Das zeigte, wie tief das Kollagen-Hydrolysat eingezogen war. Der imprägnierte Schlauch war sehr viel weicher als ein unbehandelter Vergleichsschlauch. Die Raffraupen ließen sich zudem sehr gut weiterverarbeiten.

### Beispiel 5

Ein mit einer Faserpapier-Verstärkung versehener, doppelviskosierter (40 % der Viskose wurden außen auf das zum Schlauch geformte Faserpapier, 60 % innen aufgebracht) Cellulosehydrat-Gelschlauch vom Kaliber 48 wurde zunächst vorgetrocknet. Die außen befindliche Cellulosehydratschicht war mit 9 % Titandioxid-Weißpigment, bezogen auf das Gesamtgewicht an regenerierter Cellulose, eingefärbt. Dabei wurde ihm 50 % des Wassers entzogen. Bevor der Schlauch dann in den eigentlichen Trockner einlief, wurde innen ein Volumen von 8 l einer wäßrigen Zusammensetzung eingefüllt, die einen Feststoffanteil von 4 % aufwies. Jeweils die Hälfte des Feststoffs bestand aus Kollagen-Hydrolysat und Kollagen-Fasern. Daneben enthielt die zur Innenimprägnierung eingesetzte wäßrige Zusammensetzung 3 % Glyoxal, bezogen auf das Feststoffgewicht, 6 % Gluconsäure-ö-lacton und 3 % Glycerin.

Um die Außenseite der Hülle zu imprägnieren, wurde diese flachgelegt und mit Hilfe eines Walzenantragswerks mit einer wäßrigen Zusammensetzung gemäß Beispiel 3 beaufschlagt. Überschüssige Flüssigkeit wurde mit einem Walzenpaar abgequetscht. Der Schlauch wurde dann im aufgeblasenen Zustand durch einen Heißlufttrockner geführt, wo er auf eine Endfeuchte von 8 bis 12 % getrocknet wurde. Anschließend wurde er auf 16 bis 18 % Feuchte gebracht.und zu Raupen gerafft. Die fertige Hülle war innen mit 150 mg Kollagen-Hydrolysat pro Quadratmeter in der obersten Schicht, 60 mg/m² in der darunter liegenden Schicht und 25 mg/m² in der 3. Schicht imprägniert (Bestimmung wie beschrieben). Außen wurden 140 mg Kollagen-Hydrolysat in der obersten Schicht und 70 mg/m² in der 2. Schicht gefunden.

Die so konfektionierte Hülle wurde mit Salami-Brät gefüllt. Nach der üblichen Reife zeigte die Hülle noch eine gute Haftung am Wurstbrät, ließ sich aber dennoch problemlos abziehen.

## Patentansprüche

1. Doppelviskosierter Cellulose-Faserdarm mit einer pigmentierten äußeren und einer imprägnierten inneren Cellulosehydratschicht, **dadurch gekennzeichnet, daß** die Imprägnierung der inneren Cellulosehydratschicht ein Kollagen-Hydrolysat umfaßt.

2. Cellulose-Faserdärm gemäß Anspruch 1, **dadurch gekennzeichnet, daß** die äußere Cellulosehydratschicht mit mindestens einem Weißpigment, bevorzugt mit Titandioxid-Pigmenten, pigmentiert ist.

3. Cellulose-Faserdarm gemäß Anspruch 1 oder 2, **dadurch gekennzeichnet, daß** das Kollagen-Hydrolysat ein Molekulargewicht von 3.000 bis 30.000 Dalton, bevorzugt von 3.500 bis 25.000 Dalton, besonders bevorzugt von 4.000 bis 12.000 Dalton, jeweils bestimmt durch Gelpermeations-Chromatographie, aufweist.

4. Cellulose-Faserdarm gemäß einem oder mehreren der Ansprüche 1 bis 3, **dadurch gekennzeichnet, daß** das Kollagen-Hydrolysat mit Hilfe eines Vernetzers kovalent an das Cellulosehydrat gebunden ist.

5. Cellulose-Faserdarm gemäß Anspruch 4, **dadurch gekennzeichnet, daß** die Verbindung zwischen Kollagen-Hydrolysat und Cellulosehydratschicht erreicht wird durch mindestens eine niedermolekulare Verbindung mit 2 oder mehr reaktiven Gruppen, die kovalente Bindungen zwischen dem Kollagen-Hydrolysat und der Cellulose herstellen kann.

6. Cellulose-Faserdarm gemäß Anspruch 5, **dadurch gekennzeichnet, daß** der Vernetzer 2 oder mehr Carbaldehyd-Gruppen aufweist, wobei Glyoxal, Glutardialdehyd, Bernsteinsäuredialdehyd und Zuckerdialdehyde bevorzugt sind, oder daß er ein epoxidiertes Leinöl, ein Dialkylketen oder Tannin ist.

7. Cellulose-Faserdarm gemäß einem oder mehreren der Ansprüche 1 bis 6, **dadurch gekennzeichnet, daß** er auf der äußeren und/oder der inneren Oberfläche Kollagenfasern aufweist.

8. Cellulose-Faserdarm gemäß einem oder mehreren der Ansprüche 1 bis 7, **dadurch gekennzeichnet**, das die innere Cellulosehydratschicht zusätzlich mit Gluconsäure-δ-lacton imprägniert ist.

9. Cellulose-Faserdarm gemäß Anspruch 8, **dadurch gekennzeichnet, daß** der Anteil an Gluconsäure-ö-lacton 1,0 bis 6,0 Gew.-%, bezvorzugt 2,0 bis 5,0 Gew.-%, beträgt, jeweils bezogen auf das Gewicht der inneren Cellulosehydratschicht.

10. Verfahren zur Herstellung eines Faserdarms gemäß einem oder mehreren der Ansprüche 1 bis 9, **dadurch gekennzeichnet, daß** es die folgenden Schritt umfaßt:
- Bereitstellen eines doppelviskosierten Cellulose-Faserdarms, dessen äußere Cellulosehydratschicht pigmentiert ist, wobei sich der Cellulose-Faserdarm bevorzugt noch im Gelzustand befindet,
- Aufbringen einer wäßrigen Zusammensetzung, die Kollagen-Hydrolysat, gegebenenfalls auch Kollagen-Fasern und/oder Gluconsäure-δ-lacton enthält, auf die innere und/oder äußere Oberfläche des Faserdarms,
- Trocknen des Cellulose-Faserdarms und
- gegebenenfalls Konfektionieren des Cellulose-Faserdarms.

11. Verwendung des Cellulose-Faserdarms gemäß einem oder mehreren der Ansprüche 1 bis 9 als künstliche Wursthülle, bevorzugt für Rohwurst, wie Salami.

## Claims

1. A double-viscosed cellulose fiber sausage skin having a pigmented outer cellulose hydrate layer and an impregnated inner cellulose hydrate layer **characterized in that** the impregnation of the inner cellulose hydrate layer comprises a collagen hydrolysate.

2. The cellulose fiber sausage skin as claimed in claim 1, **characterized in that** the outer cellulose hydrate layer is pigmented by at least one white pigment, preferably by titanium dioxide pigments.

3. The cellulose fiber sausage skin as claimed in claim 1 or 2, **characterized in that** the collagen hydrolysate has a molecular weight of 3000 to 30 000 dalton, preferably from 3500 to 25 000 dalton, particularly preferably from 4000 to 12 000 dalton, in each case determined by gel permeation chromatography.

4. The cellulose fiber sausage skin as claimed in one or more of claims 1 to 3, **characterized in that** the collagen hydrolysate is covalently bound to the cellulose hydrate using a crosslinker.

5. The cellulose fiber sausage skin as claimed in claim 4, **characterized in that** the bonding between collagen hydrolysate and cellulose hydrate layer is achieved by at least one low-molecular-weight compound having two or more reactive groups which can produce covalent bonds between the collagen hydrolysate and the cellulose.

6. The cellulose fiber sausage skin as claimed in claim 5, **characterized in that** the crosslinker has two or more carbaldehyde groups, wherein glyoxal, glutardialdehyde, succinic dialdehyde and sugar dialdehydes are preferred, or that it is an epoxidized linseed oil, a dialkylketene or tannin.

7. The cellulose fiber sausage skin as claimed in one or more of claims 1 to 6, **characterized in that** it has collagen fibers on the outer and/or inner surface.

8. The cellulose fiber sausage skin as claimed in one or more of claims 1 to 7, **characterized in that** the inner cellulose hydrate layer is impregnated additionally with glucono-d-lactone.

9. The cellulose fiber sausage skin as claimed in claim 8, **characterized in that** the fraction of glucono-d-lactone is 1.0 to 6.0% by weight, preferably 2.0 to 5.0% by weight, in each case based on the weight of the inner cellulose hydrate layer.

10. A process for producing a fiber sausage skin as claimed in one or more of claims 1 to 9, **characterized in that** it comprises the following step:
- providing a double-viscosed cellulose fiber sausage skin, the outer cellulose hydrate layer of which is pigmented, wherein the cellulose fiber sausage skin is preferably still in the gel state,
- applying an aqueous composition which contains collagen hydrolysate, optionally also collagen fibers and/or glucono-d-lactone, to the inner surface and/or outer surface of the fiber sausage skin,
- drying the cellulose fiber sausage skin and
- optionally further preparation of the cellulose fiber sausage skin.

11. The use of the cellulose fiber sausage skin as claimed in one or more of claims 1 to 9 as artificial sausage casing, preferably for raw sausage, such as salami.

## Revendications

1. Boyau en fibres de cellulose à double enduction de viscose comprenant une couche externe pigmentée d'hydrate de cellulose et une couche interne imprégnée d'hydrate de cellulose, **caractérisé en ce que** l'imprégnation de la couche interne d'hydrate de cellulose comprend un hydrolysat de collagène.

2. Boyau en fibres de cellulose selon la revendication 1, **caractérisé en ce que** la couche externe d'hydrate de cellulose est pigmentée avec au moins un pigment blanc, de préférence avec des pigments à base de dioxyde de titane.

3. Boyau en fibres de cellulose selon la revendication 1 ou 2, **caractérisé en ce que** l'hydrolysat de collagène présente un poids moléculaire de 3.000 à 30.000 Dalton, de préférence de 3.500 à 25.000 Dalton, de manière particulièrement préférée de 4.000 à 12.000 Dalton, chaque fois déterminé via une chromatographie par perméation du gel.

4. Boyau en fibres de cellulose selon une ou plusieurs des revendications 1 à 3, **caractérisé en ce que** l'hydrolysat de collagène est lié à l'aide d'un agent de réticulation de manière covalente à l'hydrate de cellulose.

5. Boyau en fibres de cellulose selon la revendication 4, **caractérisé en ce qu'**on obtient la liaison entre l'hydrolysat de collagène et la couche d'hydrate de cellulose via au moins un composé à bas poids moléculaire comprenant 2 groupes réactifs ou plus, qui permet de créer des liaisons covalentes entre l'hydrolysat de collagène et la cellulose.

6. Boyau en fibres de cellulose selon la revendication 5, **caractérisé en ce que** l'agent de réticulation présente 2 groupes carbaldéhyde ou plus, le glyoxal, le glutardialdéhyde, le dialdéhyde de l'acide succinique et les dialdéhydes de sucre étant préférés, ou bien **en ce qu'**il représente une huile de lin époxydée, un dialkylcétène ou du tanin.

7. Boyau en fibres de cellulose selon une ou plusieurs des revendications 1 à 6, **caractérisé en ce qu'**il présente des fibres de collagène sur la surface externe et/ou sur la surface interne.

8. Boyau en fibres de cellulose selon une ou plusieurs des revendications 1 à 7, **caractérisé en ce que** la couche interne d'hydrate de cellulose est en outre imprégnée avec de la δ-lactone d'acide gluconique.

9. Boyau en fibres de cellulose selon la revendication 8, **caractérisé en ce que** la fraction de δ-lactone d'acide gluconique s'élève de 1,0 à 6,0 % en poids, de préférence de 2,0 à 5,0 % en poids, chaque fois rapportés au poids de la couche interne d'hydrate de cellulose.

10. Procédé pour la fabrication d'un boyau à base de fibres selon une ou plusieurs des revendications 1 à 9, **caractérisé en ce qu'**il comprend les étapes suivantes consistant à :
- procurer un boyau en fibres de cellulose à double enduction de viscose, dont la couche externe d'hydrate de cellulose est pigmentée, le boyau en fibres de cellulose se trouvant de préférence encore à l'état de gel ;
- appliquer une composition aqueuse qui contient de l'hydrolysat de collagène, le cas échéant également des fibres de collagène et/ou de la δ-lactone d'acide gluconique, sur la surface interne et/ou externe du boyau à base de fibres ;
- sécher le boyau en fibres de cellulose ; et
- le cas échéant, confectionner le boyau en fibres de cellulose.

11. Utilisation du boyau en fibres de cellulose selon une ou plusieurs des revendications 1 à 9, à titre de boyau de bourrage synthétique, de préférence pour de la saucisse telle que du salami.
